# EUROPEAN PATENT SPECIFICATION

(11) **EP 1 510 324 B1**
(45) Date of publication and mention of the grant of the patent: **29.04.2009**
(21) Application number: 02736011.4
(22) Date of filing: 05.06.2002
(51) Int. Cl.: B29C 49/64, B29C 49/18, B29C 49/22, B29C 49/06, B29C 49/04

(54) **PRODUCTION METHOD OF SYNTHETIC RESIN CONTAINER EXCELLENT IN FUNCTIONAL CHARACTERISTICS**
HERSTELLUNGSVERFAHREN FÜR KUNSTHARZBEHÄLTER MIT HERVORRAGENDEN FUNKTIONALEN EIGENSCHAFTEN
PROCÉDÉ DE PRODUCTION DE RÉCIPIENT EN RÉSINE SYNTHÉTIQUE POSSÉDANT D'EXCELLENTES CARACTÉRISTIQUES FONCTIONNELLES

(43) Date of publication of application: 02.03.2005
(73) Proprietor: Yoshino Kogyosho Co., Ltd., Tokyo 136-8531 (JP)
(72) Inventor: ASAI, Nao, c/o YOSHINO KOGYOSHO CO., LTD., Koto-ku, Tokyo 136-8531 (JP); SUZUKI, Masato, c/o Yoshino Kogyosho Co., Ltd, Isehara-shi, Kanagawa 259-1103 (JP); UESUGI, Daisuke, c/o YOSHINO KOGYOSHI CO., LTD., Matsudo-shi, Chiba 270-2297 (JP)
(74) Representative: Gray, James
(86) International application number: PCT/JP2002/005561
(87) International publication number: WO 2003/103928

(56) References cited:
- EP-A1- 1 208 957
- EP-A2- 0 949 056
- JP-A- 56 105 936
- JP-A- 59 039 547
- JP-A- 61 279 553
- JP-A- 2000 289 099
- US-A- 5 389 332
- US-A- 5 571 584
- US-B1- 6 372 318

## Description

### BACKGROUND ART

### Field of the Invention

The present invention relates to a synthetic resin container capable of suppressing degradation in quality of the contents due to permeation of oxygen, carbon dioxide gas or the like through the container, while providing improved heat resistance, and also to a method for producing such container.

### Prior Art

Synthetic resin container as represented by PET bottles are recently used widely, as containers for food, beverages, cosmetics or chemicals, since such containers are light in weight and easy to handle, and are capable of preserving transparency to exhibit an appearance comparable to glass containers, besides that they can be produced at low cost.

On the other hand, synthetic resin containers suffer from a problem that, due to inevitable permeation of oxygen or carbon dioxide gas through the container main body, the so-called shelf life (i.e., the period in which the quality of the contents can be guaranteed) is relatively short as compared to glass containers.

Moreover, this type of container has a poor heat resistance, as exemplified by an upper limit temperature of 85-87 DEG C in the case of polyethylene terephthalate resin container. Particularly when a hot liquid at a temperature higher than such upper limit temperature is filled as the contents, shape deformation occurs due to thermal shrinkage. Thus, there is a limitation against expanding the scope of application.

EP 1208957 discloses a stretch blow-molded container obtained by biaxially stretching and blow-moulding a thermoplastic polyester which exhibits heat resistance or heat resistance and pressure resistance to withstand sterilisation by heating at the time of hot filling. US 6372318 discloses a method of making a polyester container having an enhanced level of crystallinity in the side wall while maintaining a low level of crystallinity in a thickened base portion.

### DISCLOSURE OF THE INVENTION

It is therefore an object of the present invention to provide a production method of a novel container capable of eliminating the above-mentioned problems of the conventional synthetic resin container.

According to the present invention, there is provided a method for producing a synthetic resin container having excellent gas barrier property and heat resistance, comprising the steps of:
subjecting a preform to a primary bi-axial stretch blow molding so as to form a primary intermediate body of the container,
subjecting the primary intermediate body to a heat treatment so as to form a secondary intermediate body of the container, and
subjecting the secondary intermediate body to a secondary bi-axial stretch blow molding so as to form the finished product, characterised in that
said preform comprises a synthetic resin having a matrix comprising polyethylene terephthalate resin that is blended with a gas barrier material, comprising a methaxylylene group-containing polyamide resin, and
said primary intermediate body of the container is 1.2 - 2.5 times larger in capacity than the finished product, and said secondary intermediate body of the container is 0.60 to 0.95 times larger in capacity than the finished product.

The preform may comprise a multi-layered structural body comprising a base layer having a matrix that is blended with a gas barrier material, and a protection layer having an enriched gas barrier property.

The protection layer may comprise at least one member selected from a group consisting of a methaxylylene group-containing polyamide resin, an amorphous polyester resin, an ethylene naphthalate-ethylene terephthalate copolymer resin and an ethylene-vinyl alcohol copolymer resin.

### BRIEF DESCRIPTION OF THE DRAWINGS

The present invention will be more fully described below with reference to the accompanying drawings.
FIG. 1 is a schematic view showing the structure of the container according to the present invention.
FIG. 2 is a view showing a preform that can be suitably used in the present invention.
FIGS. 3a through 3d show the appearance of the shaped body in various process steps of the blow molding.
FIGS. 4a and 4b are fragmentary enlarged views showing the multi-layered structure of the container according to the present invention.
FIGS. 5a through 5c are side view, plan view and bottom view, respectively, of the container according to the illustrated embodiment.

### BEST MODE FOR CARRYING OUT THE INVENTION

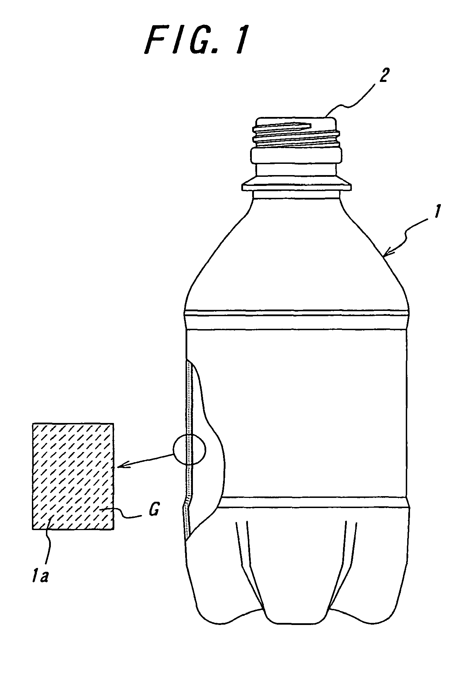

FIG. 1 schematically shows the appearance of the synthetic resin container according to the present invention, having a capacity of 500 ml, and excellent heat resistance and pressure resistance, wherein reference numeral 1 denotes a container main body, and 2 a mouth portion provided integrally for the container main body.

According to the present invention, when polyethelene terephthalate resin is used as a matrix 1a, a gas barrier material is blended into the resin in order to suppress permeation of oxygen or the like and thereby provide an improved gas barrier property.

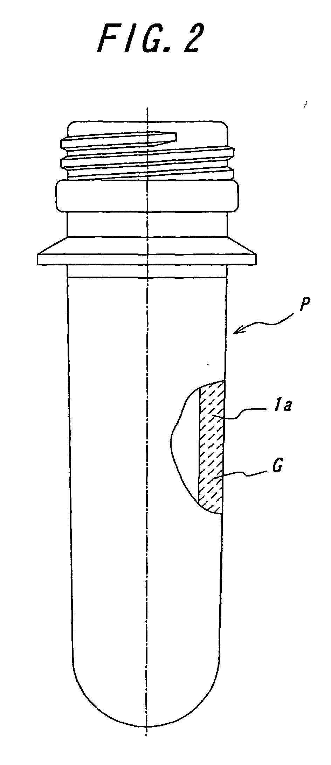

In order to produce such a container, a preform P as shown in FIG. 2 is used, which is obtained by injection molding or extrusion molding of a raw material in which a gas barrier material is blended into the base phase 1a, and of which the mouth portion is subjected to crystallization (i.e., whitening). This preform is heated to a temperature under which stretching effect is expressed, e.g., 70-130°C, more preferably 90-120°C, and then subjected to a primary bi-axial stretching blow molding under the temperature of 50-230°C, more preferably 70-180°C, and stretched surface area ratio of 4-22 times (more preferably 6-15 times, to realize an oversize of 1.2-2.5 times in capacity as compared to the finished product). Subsequently, the so-obtained blow molded body is heat treated under a temperature of 110°C to 255°C, more preferably 130°C to 200°C, to cause a forced shrinkage to 0.60 to 0.95 times of the finished product, in order to relieve the internal residual stresses, and subjected to a secondary blow molding under the temperature of 60°C to 170°C, more preferably 80°C to 150°C.

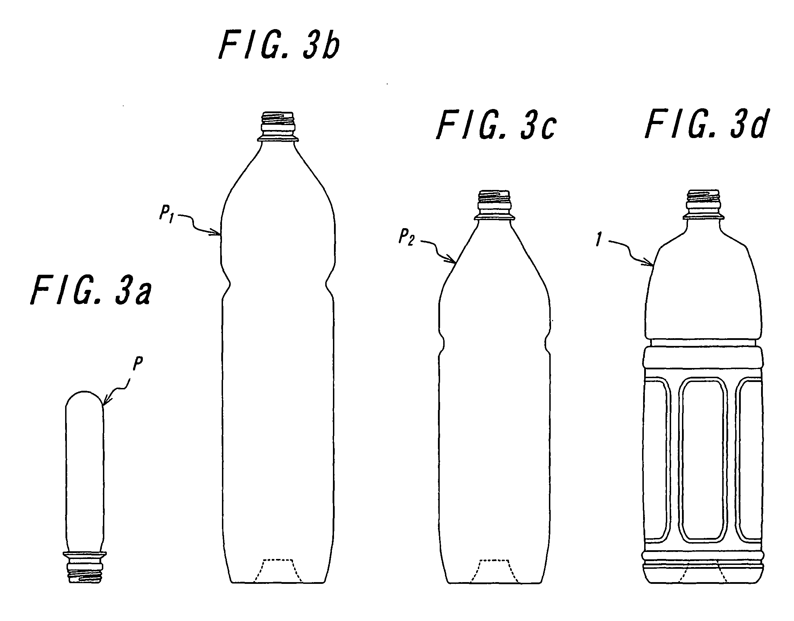

FIGS. 3a through 3d show the appearance of the shaped body in various process steps of the blow molding, from the state of preform to the finished heat-resistant container having a capacity of 1.5 liters, wherein P1 denotes a primary blow molded body, and P2 denotes the primary blow molded body after the heat treatment.

As described above, the container produced by blow moldings performed at least twice with a heat treatment therebetween has an excellent strength against external heat (improved heat resistance) and improved gas barrier performance, since the residual stresses in the main body portion are significantly relieved and the density of the resin becomes higher.

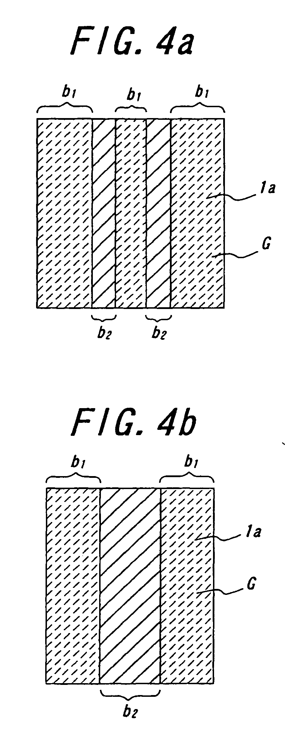

FIGS. 4a and 4b show further embodiments of the container according to the present invention, illustrating the multi-layered structure in enlarged scale. It can be seen that the base layer b1 in which the matrix 1a is blended with a gas barrier material G, and the protection layer b2 having an enriched gas barrier property may be alternately superimposed with each other to obtain a desired multi-layer structure (two-types three-layers, two-types five-layers, etc.). In this instance, it is possible to further prolong the shelf life of the merchandise, as a result of significant improvement in the gas barrier property.

The multi-layered container as shown in FIGS. 4a and 4b can be produced by using a correspondingly multi-layered preform. While the present invention has been explained with reference to two-types three-layers and two-types five-layers, the multi-layered structure is not limited to these embodiments and may be subject to changes depending upon the use applications of the container.

Besides the above-mentioned polyethylene terephthalate, the resin forming the matrix 1a may comprise a saturated polyester group thermoplastic synthetic resin, such as polybuthylene terephthalate or polyethylene naphthalate.

The barrier material that is blended into the matrix 1a comprises a methaxylylene group-containing polyamide resin, such as poly-m-xylylene adipamide (sold by Mitsubishi Gas Chemical Co., Ltd., as "MXD-6"). Other suitable materials are an amorphous polyester resin, such as a copolymer of terephthalic acid, isophthalic acid, ethylene glycol, other diol component or the like, or an ethylene naphthalate-ethylene terephthalate copolymer resin, or an ethylene-vinyl alcohol copolymer resin (EVOH).

As for the blend ratio of the barrier material, when moldability is taken into consideration, it is preferred that the blend ratio is within the range of 0.5-10 mass%, preferably 7 mass% at the highest. Also, when recycling is taken into consideration, it is preferred that the blend ratio is less than 5 mass%.

The protection layer b₂ may comprise a methaxylylene group-containing polyamide resin, an amorphous polyester resin, an ethylene naphthalate-ethylene terephthalate copolymer resin, an ethylene-vinyl alcohol copolymer resin (EVOH), or the like.

### Embodiment

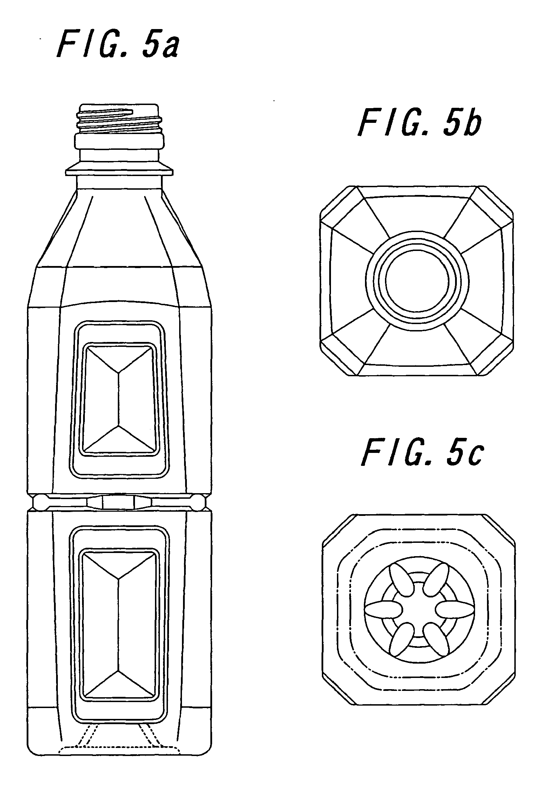

Heat resistant bottles (350 milliliters and 500 milliliters) having a square cross-section, as shown in FIGS. 5a through 5c, were made by a single blow molding using a preform comprising PET resin alone, and by a double blow molding using a preform in which PET resin is blended with a barrier material, as a basis for comparison. With respect to the bottles obtained by the respective blow moldings, oxygen permeation amount, oxygen permeation index and shelf lives were measured, the result of which is shown in Tables 1 and 2 below.

### Single blow molding conditions

- Mold temperature (main body): 110°C
- Blowing pressure: 3.92 Mpa
- Stretching speed: 42 cm/s

### Double blow molding conditions

### (First bi-axial stretch blow molding)

- Mold temperature (main body): 165°C
- Blowing pressure: 2.35 Mpa
- Stretching speed: 40 cm/s

### (Second bi-axial stretch blow molding)

- Mold temperature (main body): 104°C
- Blowing pressure: 3.92 Mpa

**Table 1**

| (350 milliliters square-section bottle) | | | | | |
|---|---|---|---|---|---|
| Blow molding | Material | Oxygen permeation amount (cc/day) | Oxygen permeation index (1=PET alone) | Shelf life | Remarks |
| Single | PET alone | 0.031 | 1 | 1 | Reference |
| Single | PET + MXD-6 | 0.026 | 0.84 | × 1.19 | Reference |
| | (2 mass% blend) | | | | |
| Single | PET+ MXD-6 | 0.022 | 0.71 | × 1.41 | Reference |
| | (4 mass% blend) | | | | |
| Double | PET alone | 0.021 | 0.68 | × 1.48 | Reference |
| Double | PET + MXD-6 | 0.018 | 0.58 | × 1.72 | Reference |
| | (2 mass% blend) | | | | |
| Double | PET+ MXD-6 | 0.013 | 0.42 | × 2.38 | Invention |
| | (4 mass% blend) | | | | |

**Table 2**

| (500 milliliters square-section bottle) | | | | | |
|---|---|---|---|---|---|
| Blow molding | Material | Oxygen permeation amount (cc/day) | Oxygen permeation index (1=PET alone) | Shelf life | Remarks |
| Single | PET alone | 0.038 | 1 | 1 | Reference |
| Single | PET + MXD-6 | 0.031 | 0.81 | × 1.23 | Reference |
| | (2 mass% blend) | | | | |
| Single | PET + MXD-6 | 0.026 | 0.68 | × 1.48 | Reference |
| | (5 mass% blend) | | | | |
| Double | PET alone | 0.027 | 0.71 | × 1.41 | Reference |
| Double | PET + MXD-6 | 0.024 | 0.63 | × 1.58 | Invention |
| | (2 mass% blend) | | | | |
| Double | PET + MXD-6 | 0.02 | 0.53 | × 1.90 | Invention |
| | (5 mass% blend) | | | | |

As can be seen from Tables 1 and 2 above, it has been confirmed that the container according to the present invention makes it possible to markedly lower the oxygen permeation amount and significantly prolong the shelf life of the merchandise.

Moreover, in connection with the heat resistance, while the container produced by the single blow molding gave rise to shape deformation at the temperature of the contents of about 85-87°C, the container according to the present invention has a significantly improved heat resistance in that shape deformation does not occur up to the temperature of about 90-93°C.

It will be appreciated from the foregoing description that, according to the present invention, improvement can be achieved not only in the heat resistance, but also in the gas barrier property, thereby making it possible to enlarge the applicable scope of the container and/or to maintain the quality of the contents for a longer period.

It is needless to mention that the present invention is not limited to the above-described embodiment, and various changes or modifications may be made.

## Claims

1. A method for producing a synthetic resin container (1) having excellent gas barrier property and heat resistance, comprising the steps of:
subjecting a preform (P) to a primary bi-axial stretch blow molding so as to form a primary intermediate body (P₁) of the container (1),
subjecting the primary intermediate body (P₁) to a heat treatment so as to form a secondary intermediate body (P₂) of the container (1), and
subjecting the secondary intermediate body (P₂) to a secondary bi-axial stretch blow molding so as to form the finished product, **characterised in that**
said preform (P) comprises a synthetic resin having a matrix comprising polyethylene terephthalate resin that is blended with a gas barrier material, comprising a methaxylylene group-containing polyamide resin, and
said primary intermediate body (P₁) of the container (1) is 1.2 to 2.5 times larger in capacity than the finished product, and said secondary intermediate body (P₂) of the container (1) is 0.60 to 0.95 times larger in capacity than the finished product.

2. The method according to claim 1, wherein said preform (P) comprises a multi-layered structural body comprising a base layer (b₁) comprising said matrix, and a protection layer (b₂) having an enriched gas barrier property.

3. The method according to claim 2, wherein said protection layer (b₂)comprises at least one member selected from a group consisting of a methaxylylene group-containing polyamide resin, an amorphous polyester resin, an ethylene naphthalate-ethylene terephthalate copolymer resin and an ethylene-vinyl alcohol copolymer resin.

4. The method according to claim 1, wherein the gas barrier material is blended in said matrix of the synthetic resin with a blend ratio of 0.5-10 mass%.

5. The method according to claim 4, wherein said blend ratio of the gas barrier material is less than 5 mass%.

## Patentansprüche

1. Verfahren zur Herstellung eines Kunstharzbehälters (1) mit ausgezeichneten Gasbarriere-Eigenschaften und einer ausgezeichneten Wärmebeständigkeit, umfassend die folgenden Schritte:
- das Ausführen eines ersten biaxialen Streckblasformverfahrens an einem Vorformling (P) zur Herstellung eines ersten Zwischenkörpers (P₁) des Behälters (1),
- das Durchführen einer Wärmebehandlung an dem primären Zwischenkörper (P₁) zur Herstellung eines zweiten Zwischenkörpers (P₂) des Behälters (1) und
- das Ausführen eines zweiten biaxialen Streckblasformverfahrens an dem zweiten Zwischenkörper (P₂) zur Herstellung des Endprodukts,
**dadurch gekennzeichnet,**
**dass** der Vorformling (P) ein Kunstharz enthält, das eine Matrix aufweist, die mit einem Gasbarriere-Material vermengtes Polyethylenterephthalat enthält, welches ein eine metha-Xylylengruppe enthaltendes Polyamidharz enthält, und dass der erste Zwischenkörper (P₁) des Behälters (1) eine 1,5 bis 2,5 Mal größere Kapazität als das Endprodukt besitzt und die Kapazität des zweiten Zwischenkörpers (P₂) des Behälters (1) 0,60 bis 0,95 Mal größer ist als die des Endprodukts.

2. Verfahren nach Anspruch 1, wobei der Vorformling (P) einen mehrschichtigen Baukörper hat, umfassend eine Basisschicht (b₁), die die Matrix enthält, und eine Schutzschicht (b₂), die die Eigenschaft einer Barriere für angereichertes Gas besitzt.

3. Verfahren nach Anspruch 2, wobei die Schutzschicht (b₂) zumindest ein Element enthält, das aus der Gruppe ausgewählt wird, die aus eine metha-Xylylengruppe enthaltendem Polyamidharz, einem amorphen Polyesterharz, einem Ethylennaphthalat-Ethylenterephthalat-Copolymerharz und einem Ethylen-Vinylalkohol-Copolymerharz besteht.

4. Verfahren nach Anspruch 1, wobei das Gasbarriere-Material in der Matrix aus dem synthetischen Harz mit einem Mischungsverhältnis von 0,5-10 Gew.-% gemischt ist.

5. Verfahren nach Anspruch 4, wobei das Mischungsverhältnis des Gasbarriere-Materials weniger als 5 Gew.-% beträgt.

## Revendications

1. Procédé de production d'un récipient en résine synthétique (1) dont la propriété de barrière contre les gaz et la résistance thermique sont excellentes, comprenant les étapes consistant à :
soumettre une préforme (P) à un premier moulage par soufflage avec un étirement bi-axial afin de former un corps intermédiaire primaire (P₁) du récipient (1),
soumettre le corps intermédiaire primaire (P₁) à un traitement thermique afin de former un corps intermédiaire secondaire (P₂) du récipient (1), et
soumettre le corps intermédiaire secondaire (P₂) à un second moulage par soufflage avec étirement bi-axial afin de former le produit fini, **caractérisé en ce que**
ladite préforme (P) comprend une résine synthétique ayant une matrice comprenant une résine de poly(téréphtalate d'éthylène) qui est mélangée avec un matériau de barrière contre les gaz, comprenant une résine de polyamide contenant des groupes méthaxylylènes et
la capacité dudit corps intermédiaire primaire (P₁) du récipient (1) est 1,2 à 2,5 fois plus grande que celle du produit fini, et la capacité dudit corps intermédiaire secondaire (P₂) du récipient (1) est 0,60 à 0,95 fois plus grande que celle du produit fini.

2. Procédé selon la revendication 1, dans lequel ladite préforme (P) comprend un corps à structure multicouche comprenant une couche de base (b₁) comprenant ladite matrice, et une couche de production (b₂) présentant une propriété de barrière contre les gaz enrichis.

3. Procédé selon la revendication 2, dans lequel ladite couche de protection (b₂) comprend au moins un élément choisi dans un groupe constitué par une résine de polyamide contenant des groupes méthaxylylènes, une résine de polyester amorphe, une résine de copolymère de naphtalate d'éthylène-téréphtalate d'éthylène et une résine de copolymère d'éthylène-alcool vinylique.

4. Procédé selon la revendication 1, dans lequel le matériau de barrière contre les gaz est mélangé dans ladite matrice de la résine synthétique avec un rapport de mélange de 0,5 % en poids à 10 % en poids.

5. Procédé selon la revendication 4, dans lequel ledit rapport de mélange du matériau de barrière contre les gaz est inférieur à 5 % en poids.
